# EUROPÄISCHE PATENTANMELDUNG

(11) **EP 2 323 016 A2**
(43) Veröffentlichungstag der Anmeldung: **18.05.2011**
(21) Anmeldenummer: 10186697.8
(22) Anmeldetag: 06.10.2010
(51) Int. Cl.: G06F 3/023, G06F 3/048, G06F 17/24

(54) **Löschung von Worten oder Wortbestandteilen auf einem Bildschirm**

(30) Priorität: 16.10.2009 DE 102009049833
(71) Anmelder: Deutsche Telekom AG, 53113 Bonn (DE)
(72) Erfinder: Matveev, Yuriy, 34119, Kassel (DE); Bär, Matthias, 63546, Hammerbach (DE); Brückmann, Niko, 65428, Rüsselsheim (DE); Walzer, Robin, 60431, Frankfurt am Main (DE)
(74) Vertreter: Braun-Dullaeus, Karl-Ulrich

(57) **Zusammenfassung**

Verfahren zum Löschen oder Ausschneiden in einer Datei vorhandener und auf einem Bildschirm, insbesondere dem Bildschirm eines mobilen Endgerätes, insbesondere eines Mobiltelefons, dargestellter Worte und/oder Wortbestandteile mittels einer Befehlseingabe, die dem Nutzer die Möglichkeit gibt, den vor oder hinter einem auf dem Bildschirm dargestellten Cursor stehenden Buchstaben mit einem Befehl auszuschneiden,
wobei die Befehlseingabe dem Nutzer zusätzlich in einer zweiten Befehisvariante die Möglichkeit gibt, das komplette vor oder hinter dem Cursor dargestellte Wort mit einem einzigen Befehl zu löschen.

## Beschreibung

Die vorliegende Erfindung betrifft ein Verfahren zum Löschen oder Ausschneiden in einer Datei vorhandener und auf einem Bildschirm, insbesondere dem Bildschirm eines mobilen Endgerätes, insbesondere eines Mobiltelefons, dargestellter Worte und/oder Wortbestandteile mittels einer Befehlseingabe, wobei die Befehlseingabe dem Nutzer die Möglichkeit gibt, den vor oder hinter einem auf dem Bildschirm dargestellten Cursor stehenden Buchstaben mit einem Befehl aus zu schneiden.

Will ein Nutzer auf den heute bekannten Geräten Worte oder Wortbestandteile, die er auf dem Bildschirm eines Endgerätes angezeigt bekommt, löschen, so hat er die Möglichkeit, den Cursor im Textfluss vor oder hinter das zu löschende Wort zu positionieren und dann die Rückwärtslöschtaste oder, falls vorhanden, die Vorwärtslöschtaste zu drücken. Bei der Betätigung wird jeweils nur der dem Cursor nächstliegende Buchstabe des Wortes gelöscht. Bei längeren Textpassagen ist das Löschen entsprechend mühsam,

Moderne Endgeräte bieten auch die Möglichkeit, ganze Textpassagen zu markieren und auf einmal zu löschen oder für eine Wiederverwendung auszuschneiden. Bei einem solchen Ausschneiden wird der Textbestandteil in das sogenannte "Clip Board" überführt und kann von dort wieder hervor geholt werden. Diese Funktionalität ist auch als "Copy/Paste" bekannt. Das Markieren vor allem ohne eine "Maus" oder einen "Trackball" ist aber insofern ein komplexer Vorgang, als zwei Tasten auf einmal gedrückt werden müssen. Eine genaue Abgrenzung im Text gestaltet sich somit oft schwierig, insbesondere auch, wenn zeilenübergreifend markiert werden soll.

Die Aufgabe der vorliegenden Erfindung liegt nunmehr darin, ein einfach umzusetzendes Verfahren vorzuschlagen, das eine komfortable und sichere Möglichkeit des Ausschneidens respektive des Löschens von Worten und/oder Wortbestandteilen in einem Text ermöglicht, Zudem ist es die Aufgabe, ein mobiles Endgerät zur Durchführung des Verfahrens zu schaffen.

Diese Aufgaben werden durch ein Verfahren mit den kennzeichnenden Merkmalen des Anspruchs 1 und ein mobiles Endgerät nach Anspruch 10 gelöst. Vorteilhafte Ausgestaltungen sind in den jeweiligen Unteransprüchen genannt.

Der wesentliche Grundgedanke der Erfindung liegt in der quasi Mehrfachbelegung der einen Löschtaste respektive des einen auf dem Touch Screen vorhandenen Löschfeldes. Die Begriffe "Löschtaste" und "Löschfeld" werden nachfolgend mitunter synonym gebraucht. Die Löschtaste ist erfindungsgemäß so gestaltet, dass die Befehlseingabe dem Nutzer zusätzlich zu der einfachen Löschfunktion eine zweite Befehlsvariante vorgibt, mit der das komplette vor oder hinter dem Cursor dargestellte Wort mit einem einzigen Befehl gelöscht werden kann, wobei das Wort an dem nächsten Leerzeichen endet. Dieses kann einfach von der Funktionalität erkannt werden. Dabei sei bemerkt, dass "Löschen" in diesem Zusammenhang auch das Ausschneiden für die spätere Wiederverwendung meint. In einer besonders zu bevorzugenden Ausführungsform gibt die Befehlseingabe dem Nutzer zusätzlich noch eine dritten Befehlsvariante vor, mit der mehrere vor oder hinter dem Cursor dargestellte Worte insbesondere ganze Sätze gelöscht werden können, wobei ein Satz durch Satzzeichen definiert sein kann, die von der Funktionalität erkannt werden.

Der Vorteil der erfindungsgemäßen Vorgehensweise liegt darin, dass der Nutzer bequem mit einem einzigen Befehl ganze Worte definiert löschen kann. Dieser Vorteil kommt besonders dann zum tragen, wenn dem Endgerät die Befehle per Tastatur eingegeben werden müssen, wie es insbesondere bei Mobiltelefonen oder ähnlichen Geräten der Fall ist.

Wenn das Löschen durch Befehlseingabe mittels eines Druckes auf eine Löschtaste oder mittels Berührens eines auf einem Touch Screen dargestellten Löschfeldes geschieht, dann ist es besonders vorteilhaft, wenn dem Nutzer vor der Durchführung des Befehls zumindest zwei der Befehlsvarianten auf dem Bildschirm eingeblendet werden, Auf diese Weise kann er sich orientieren, in welchem Ausmaß das Löschen respektive das Ausschneiden durchgeführt werden wird, bevor er den endgültigen Befehl auslöst.

In einer anderen Variante kann die Löschfunktion so gestaltet sein, dass ein kurzes oder ein schwaches Drücken der Löschtaste einen einzigen vor oder hinter dem Cursor dargestellten Buchstaben löscht, also die an sich bekannte Löschfunktion umsetzt. Ähnliches gilt für das Löschfeld auf einem Touch Screen, das bei einem kurzzeitigen Antippen das Löschen eines einzigen Buchstaben bewirkt. Vorteilhaft ist es zudem, wenn entsprechend bei einem langen oder einem starken Drücken der Löschtaste dem Nutzer die alternativen Befehlsvarianten zum Löschen von einem oder mehreren Worten vorgegeben werden. Auf diese Weise können Löschtasten oder Löschfelder mit einer Doppelfunktion ausgestattet werden,

Wenn der Bildschirm ein Touch Screen Bildschirm ist, dann ist es besonders vorteilhaft, wenn auf Druck in Form einer Berührung der Löschtaste respektive des Löschfeldes dem Nutzer vor der Ausführung des Befehls die Befehlsvarianten in getrennten Eingabefeldern vorgegeben werden. Eine Berührung des Löschfeldes veranlasst somit die Darstellung der Eingabefelder, die der Nutzer dann gezielt anwählen kann. Vorteilhafterweise sind diese Eingabefelder so gestaltet, dass in ihnen die zu löschenden Worte in einer instruktiven Weise grafisch dargestellt sind, so dass der Nutzer genau vor Augen hat, was er bei Betätigung löschen wird. Auf diese Weise ist eine besonders intuitive Bedienung des Endgerätes möglich.

Weiterhin ist es für eine besonders übersichtliche Darstellung vorteilhaft, wenn die getrennten Eingabefelder die Darstellung der restlichen Tastatur überblenden, wenn dem Nutzer quasi nur noch die für den Löschbefehl erforderlichen Felder gezeigt werden, So kann eine Fehlbedienung nahezu ausgeschlossen werden. Im Falle eines Touch Screen Bildschirmes kann der Nutzer dann mit einem Eingabemittel, insbesondere mit seinem Finger, von der Löschtaste respektive dem Löschfeld unter Aufrechterhaltung der Berührung zu dem gewünschten Eingabefeld gleiten.

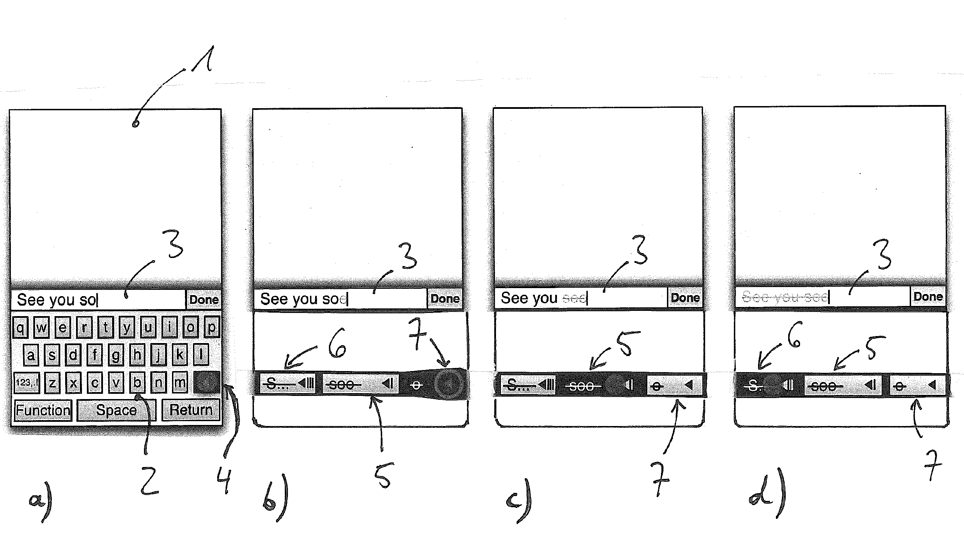

Nachfolgend wird die Erfindung anhand eines Ausführungsbeispieles entsprechend der Figur mit den Detaildarstellungen a) bis d) näher erklärt.

In der Figur ist der Touch Screen Bildschirm eines Mobiltelefons dargestellt, auf dem der Nutzer gerade den Text einer Nachricht geschrieben hat und diesen teilweise löschen möchte. Der Bildschirm hat einen für Darstellungen freien Bildschirmbereich 1 und einen Bildschirmbereich, auf dem eine Tastatur 2 mit mehreren aktiven Tasten dargestellt ist (Detaildarstellung a). Zwischen den Bereichen 1 und 2 befindet sich eine Zwischenzeile 3, in welcher der geschriebene Text "see you so.." dargestellt ist. Die Tastatur 2 weist auch ein Löschfeld 4 auf, das mit einem Pfeil gekennzeichnet ist. In Detaildarstellung a) hat der Nutzer das Löschfeld 4 berührt, so dass es aufleuchtet.

Nach Berührung des Löschfeldes 4 wird in Detaildarstellung b) die Tastatur ausgeblendet und der frei werdende Bereich wird von der Darstellung der alternativen Befehlsvarianten in Form eines Eingabefeldes 5 "Lösche das letzte Wort" und in Form eines Eingabefeldes 6 "Lösche den ganzen Satz" überblendet Der Nutzer hält seinen Finger jedoch noch auf der Pfeiltaste 7, wobei ihm in der Zwischenzeile 3 ein "delete character" signalisiert wird, womit er das zuletzt geschriebene "o" löscht.

Nach der Detaildarstellung c) gleitet der Nutzer mit seinem Finger nun von der Pfeiltaste 7 zum Eingabefeld 5, das entsprechend durch farbliche Unterlegung markiert ist. Die Unterlegung der Pfeiltaste 7 verschwindet entsprechend. In der Zwischenzeile 3 wird ihm, wie im Eingabefeld, mit einem "delete word" signalisiert, dass bei einem Verbleib der Berührung der zuletzt geschriebene Wortbestandteil "soo" gelöscht werden wird.

Nach der Detaildarstellung d) gleitet der Nutzer mit seinem Finger nunmehr vom Eingabefeld 5 zum Eingabefeld 6, das wiederum durch farbliche Unterlegung markiert wird. Die Unterlegung des Eingabefeldes 5 verschwindet entsprechend. In der Zwischenzeile 3 wird ihm, wie im Eingabefeld, mit einem "delete sentence" durch das "S" mit den nachfolgenden "...." signalisiert, dass bei einem Verbleib der Berührung der zuletzt geschriebene Satz "See you soo" gelöscht werden wird.

## Patentansprüche

1. Verfahren zum Löschen oder Ausschneiden in einer Datei vorhandener und auf einem Bildschirm, insbesondere dem Bildschirm eines mobilen Endgerätes, insbesondere eines Mobiltelefons, dargestellter Worte und/oder Wortbestandteile mittels einer Befehlseingabe, die dem Nutzer die Möglichkeit gibt, den vor oder hinter einem auf dem Bildschirm dargestellten Cursor stehenden Buchstaben mit einem Befehl auszuschneiden,
**dadurch gekennzeichnet,**
**dass** die Befehlseingabe dem Nutzer zusätzlich in einer zweiten Befehlsvariante die Möglichkeit gibt, das komplette vor oder hinter dem Cursor dargestellte Wort mit einem einzigen Befehl zu löschen.

2. Verfahren nach Anspruch 1,
**dadurch gekennzeichnet, dass** die Befehlseingabe dem Nutzer zusätzlich in einer dritten Befehlsvariante die Möglichkeit gibt, mehrere vor oder hinter dem Cursor dargestellte Worte, insbesondere einen definierten Satz, mit einem einzigen Befehl zu löschen.

3. Verfahren nach Anspruch 1 oder 2,
**dadurch gekennzeichnet, dass** das Löschen durch Befehlseingabe mittels Druckes auf eine Löschtaste geschieht, wobei bei Drücken der Löschtaste dem Nutzer vor der Befehlsdurchführung zumindest zwei Befehlsvarianten durch Einblendung auf dem Bildschirm aufgezeigt werden.

4. Verfahren nach einem der vorherigen Ansprüche,
**dadurch gekennzeichnet, dass** ein kurzes oder ein schwaches Drücken der Löschtaste einen einzigen vor oder hinter dem Cursor dargestellten Buchstaben löscht.

5. Verfahren nach einem der vorherigen Ansprüche,
**dadurch gekennzeichnet, dass** bei einem langen oder einem starken Drücken der Löschtaste dem Nutzer die Befehlsvarianten zum Löschen von einem oder mehreren Worten vorgegeben werden.

6. Verfahren nach einem der vorherigen Ansprüche,
**dadurch gekennzeichnet, dass** der Bildschirm ein Touch Screen Bildschirm ist, wobei auf Druck in Form einer Berührung der Löschtaste dem Nutzer die Befehlsvarianten in getrennten Eingabefeldern vorgegeben werden.

7. Verfahren nach Anspruch 6,
**dadurch gekennzeichnet, dass** in den Eingabefeldern die zu löschenden Worte in einer instruktiven Weise grafisch dargestellt werden,

8. Verfahren nach Anspruch 6 oder 7,
**dadurch gekennzeichnet dass** die getrennten Eingabefelder die Darstellung der restlichen Tastatur überblenden.

9. Verfahren nach einem der Ansprüche 6 bis 8,
**dadurch gekennzeichnet, dass** der Nutzer mit einem Eingabemittel, insbesondere mit seinem Finger, von der Löschtaste unter Aufrechterhaltung der Berührung zu dem gewünschten Eingabefeld gleitet,

10. Mobiles Endgerät, insbesondere Mobiltelefon, zur Durchführung des Verfahrens nach einem der vorherigen Ansprüche, mit einem Touch Screen Bildschirm zur Darstellung einer Löschtaste oder eines Löschfeldes (4),
**dadurch gekennzeichnet, dass** eine Beaufschlagung der Löschtaste oder des Löschfeldes (4) eine Darstellung mindestens zweier alternativer Befehlsvarianten zum Löschen eines Wortbestandteiles und/oder eines Wortes und/oder mehrerer Worte auf dem Bildschirm auslöst.

11. Mobiles Endgerät nach Anspruch 10,
**dadurch gekennzeichnet dass** die Darstellung der alternativen Befehlsvarianten die Darstellung der Tastatur (2) überblendet.
